Europäisches Patentamt

(19) European Patent Office

Office européen des brevets

(11) Publication number: **0 106 579**
**A2**

(12) # EUROPEAN PATENT APPLICATION

(21) Application number: **83305672.4**

(22) Date of filing: **23.09.83**

(51) Int. Cl.³: **F 16 D 3/78**
**B 62 D 1/16**

(30) Priority: **23.09.82 GB 8227114**

(43) Date of publication of application:
**25.04.84 Bulletin 84/17**

(84) Designated Contracting States:
**AT BE CH DE FR GB IT LI LU NL SE**

(71) Applicant: **SUPRA GROUP PLC**
**Hainge Group Tividale**
**Warley West Midlands(GB)**

(72) Inventor: **Hazell, Quinton**
**Birdingbury Manor Birdingbury**
**Nr. Rugby, Warwickshire(GB)**

(74) Representative: **Hands, Horace Geoffrey et al,**
**GEORGE FUERY & CO Whitehall Chambers 23 Colmore**
**Row**
**Birmingham B3 2BL(GB)**

(54) **Flexible couplings.**

(57) A motor vehicle steering coupling comprises a spider of synthetic resinous material pre-moulded about metal bushes so that one diametrically arranged pair of bushes can be connected e.g. to the steering column and the other diametrically arranged pair of bushes can be connected to the steered sub-axles, the spider being moulded into a casing of rubber or like substantially surrounding the spider.

Fig. 1

EP 0 106 579 A2

1.

## FLEXIBLE COUPLINGS.

This invention relates to flexible couplings primarily for use in motor vehicle steering systems. Such couplings are particularly necessary with contemporary designs, where because of the use of transverse engines, a simple and relatively direct linkage between the steering column and the axle is not possible.

It is known to make a coupling in the form of a rubber disc moulded about four metal bushes having parallel axes located at the corners of an imaginary square, so that two diagonally related bushes can be used to couple one component and the other two to connect to the second component and transmit torque from one to the other with the disc permitting a degree of flexing when the respective components are not axially aligned. It is also known to reinforce the disc by a winding of cord looped about the respective bushes and embedded in the disc (which effectively is moulded about the pre-assembled cord and bushes) and such a system can provide the required flexibility within narrow limits which are desirable so that the steering will not feel sloppy due to excess relative movement being possible between one pair of bushes and the other. But such a coupling is relatively expensive to manufacture and an object of the present invention is to provide an improvement.

According to the invention a motor vehicle steering coupling comprises four metal bushes having parallel axes located at the corners of an imaginary square and moulded into a spider of synthetic resinous material, the spider and bushes being partially encased by an enveloping rubber or like disc.

The spider, which may be made of nylon, can be injection moulded about the pre-located bushes to provide the equivalent of the bushes and cord winding of the prior art, but in a much simpler manner. The flexibility and torque transmitting characteristics of the assembly will be determined by the material used for the spider and its shape, for example its cross-sectional thickness, as well as by the nature of the rubber or like.

The synthetic resinous material used for the spider must be such as to withstand the moulding temperature when the encasing rubber is added, without detriment to the spider.

One typical coupling in accordance with the invention is illustrated in the accompanying drawing in which:-

Figure 1 is a plan view of the complete coupling; and

Figure 2 is a sectional elevation of the same; two alternatives are shown in Figures 3 and 4.

In the drawing, the metal bushes 10 are seen to be moulded into a generally cruciform spider 12 made of an appropriate nylon material, and the nylon is substantially encased by a rubber moulding 14 forming the complete disc

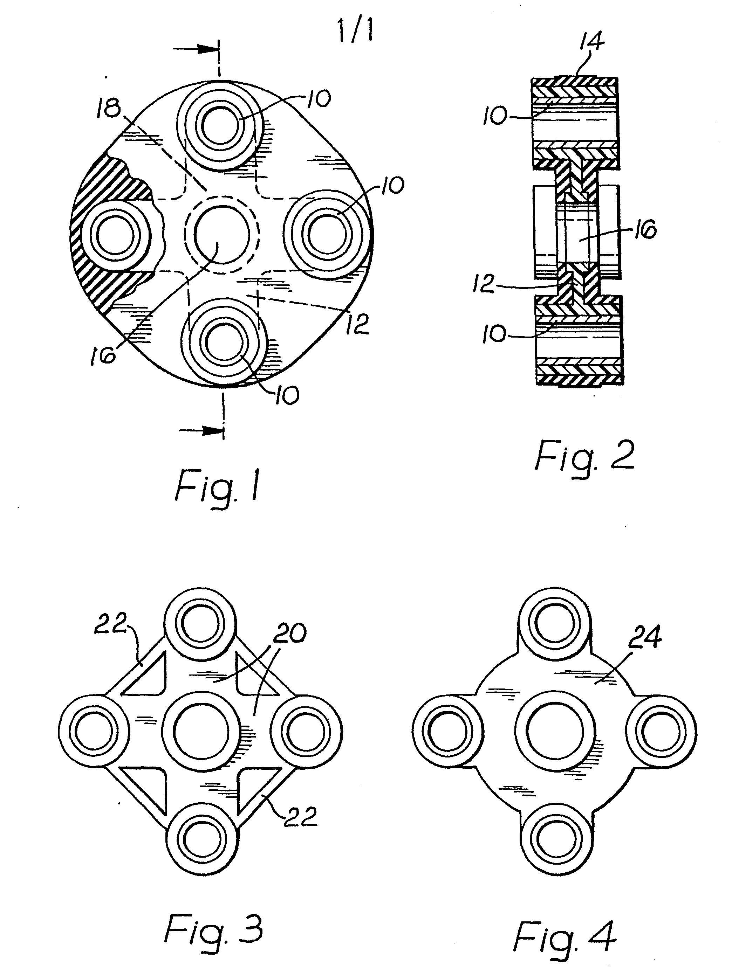

The outline of the spider is shown by the chain dot line in Figure 1 and it will be noted that there is a central aperture 16. The width and thickness of the spider in the corner between each two adjacent arms, generally where indiated
by the reference numberal 18 is important to the
stiffness of the spider.  However, it will be appreciated
that the stiffness depends not only on the dimensions
of the parts but also on the nature of the materials
used.

The modification shown in Figure 3 is a spider
for use in a disc generally as shown in Figure 1,
but in this case the individual arms 20 of the nylon
spider are joined by strips 22, and these strips
can have a relatively major effect on the angular
stiffness in transmitting torque, whilst having
a relatively minor effect on the flexibility of
the device.  Again, the cross sectional area of
the strip 22 is important to this.

In the arrangement shown in Figure 4, a spider
again for use in a disc generally as in Figure 1,
is provided having a relatively large annular area
24 joining the bushes and this may have a very much
greater stiffness against angular deflection and
also a greater stiffness against flexing than the
Figure 3 arrangement.

Many other versions can be devised within
the scope of the invention.

# CLAIMS

1.    A motor vehicle steering coupling comprising four metal bushes having parallel axes located at the corners of an imaginary square and moulded into a spider of synthetic resinous material, the spider and bushes being partially encased by an enveloping rubber or like disc.

2.    A coupling as claimed in Claim 1 wherein the spider comprises arms radiating from a centre.

3.    A coupling as claimed in Claim 2 wherein the arms (20) are connected towards their free outer ends by generally circumferentially extending strips (22).

4.    A coupling as claimed in Claim 1 wherein the bushes are located generally at the periphery of an annulus (24).

0106579

1/1

18  10
10
12
16
10

Fig. 1

14
10
16
12
10

Fig. 2

22  20
22

Fig. 3

24

Fig. 4